# EUROPEAN PATENT APPLICATION

(11) **EP 1 610 441 A2**
(43) Date of publication of application: **28.12.2005**
(21) Application number: 05016163.7
(22) Date of filing: 10.12.2002
(51) Int. Cl.: H02J 7/35, H04Q 7/30

(54) **Radio base station for mobile cellular telephony fed by solar and wind energy sources**

(30) Priority: 22.01.2002 IT RM20020027
(62) Divisional of application: 02425757.8
(71) Applicant: Tim Italia S.p.A., 20123 Milano (IT)
(72) Inventor: Colmayer, Arcangelo, 00147 Roma (IT)
(74) Representative: Giannesi, Simona

(57) **Abstract**

A radio base station for mobile cellular telephony comprising:
- a radio transceiver system;
- plants for generating electric energy from solar energy and wind energy;
- a battery set comprising a plurality of cells, that cooperates with said plants for storing the generated electric energy and feeding said radio transceiver system;
- a monitoring device for monitoring said battery set and preventing malfunctions adapted to actively interact in a selective way with each cell of the battery set so as to maintain the charge in each cell within a preset deviation from a predetermined average voltage.

## Description

The invention generally relates to a radio base station for cellular telephony supplied through a renewable energy plant. More specifically, it relates to a complete system based on the utilisation of electric energy taken from renewable energy sources, like solar and wind energies, which in combination are used to feed a transceiver station for cellular telephony; moreover, this system allows conversion of said renewable energy into electric energy, in a continuous manner, and is able to cope with the electric loads (reception and transmission, conditioning, illumination, etc.) typical of the various apparatus included in the base radio station for cellular telephony.

Such an electric energy supply station exploiting a photovoltaic and wind energy source has optimum performance when it is installed in sunny and windy places - said conditions being generally met on high grounds where the radio base stations and the related antennas are mounted - but plants realised according to the present invention have the peculiarity of working autonomously also in case of particularly unfavourable climatic conditions, whilst eliminating at the same time any problem of environmental pollution.

In presently known radio base stations for cellular telephony, in case electric energy cannot be directly supplied, use is made of local generating sets (power units), notwithstanding their costs.

At present, in Italy there are hundreds of stations located in hardly accessible places (mountains, isles, etc.) where it is required to make use of said indirect supply by employing a locally installed electric energy generator.

Such 'in situ production' of electric energy required to operate the radio base station, besides being very expensive because of fuel consumption, also has noticeable drawbacks.

First of all, it is necessary to periodically refuel the generating sets with gasoline or gas oil, and therefore it is required to reach, from time to time, stations which are often located in zones difficult to reach.

Moreover, since such stations are usually located in protected areas, the continuous emissions of polluting sulphur dioxide by the generating set, which is operating 24 hours each day, give rise to noticeable environmental pollution problems. On the other hand, till now the use of photovoltaic energy and/or wind energy, in order to supply electric energy to the radiotelephonic apparatus, has not lead to any practical solution.

Above all, solutions are known according to which the photovoltaic effect is used to convert solar energy, and thereby supply single call boxes, and also telephone apparatus for emergency apparatus or for remote detection, all of which are located in isolated areas (forests, motorways, mountains, etc.). However, the combined use of more than one alternative and renewable energy source, and their regulation and control for the continuous supply - based on different electric energy sources - of the base radio station for a cellular network, has never been considered till now. Moreover, these kinds of base radio stations have specific electric energy supply requirements, that are certainly different from those of an individual telephone apparatus and that would certainly not be fulfilled by a simple photovoltaic plant, due to the low efficiency and limited production of the latter.

Zahran M et al. ("PV battery wind-turbine public-grid hybrid power supply for telecom-equipment, system management & control", Conference Proceedings Article, Vol. 2, 24 July 2000, pages 1252-1260) disclose a system wherein a photovoltaic generator and a wind turbine are used as a main source of energy for a telecommunication equipment and a storage battery is used as energy buffer for the system while the public grid is also present as a stand-by power supply in worst cases.

Hopkins W ("Wind turbines for professional telecommunications: the 15 year running of a wind turbine for a microwave relay station in southern France and subsequent developments", Telecommunications Energy Conference, 1995, INTELEC '95, 17^{th} International THE HAGUE, Netherlands 29 Oct.-1 Nov. 1995, NEW YORK, NY, USA, IEEE, US, 29 October 1995, pages 741-746) discloses an example of a system supplying a microwave relay station comprising a photovoltaic array, a diesel generating set and a wind turbine which all feed into a battery bank of 24 battery cells. In this system, the turbine has priority over the other sources for battery charging, then the photovoltaic array, then the diesel generator. A dump load is used to avoid over-charging of the batteries.

Heinemann D et al. ("Design of a solar/wind power supply for a remote data acquisition station", Conference proceedings Article, 15 October 1989, 22.3, pages 1-4) report on simulation calculations made in order to determine the system configuration of an autonomous renewable power supply for a remote ecological station monitoring concentrations of O₃ and NO₂. The system is powered by photovoltaics and a wind energy converter and includes a Pb-battery storage. No back-up energy source is used.

An object of the present invention is to provide a radio base station for mobile cellular phones supplied by an electric energy supply-station, or generating-station, using renewable energy sources, said station combining and taking advantage of the activity of more than one energy conversion plant of the energy obtained from different renewable sources - of the photovoltaic and wind energy kind - thereby allowing an uninterrupted and independent operation of the base radio station itself.

A further object of the present invention is to provide an electric energy generating - station using a renewable source, which is easy to implement both under the aspect of the design and the aspect of its operative functions, this object being attained using supporting structures and seats of transceiver apparatus which are already provided for in the base radio station itself.

A last object of the present invention is to provide a radio base station for cellular mobile telephony using a renewable sources of energy, which utilises standard apparatus, materials, and technologies in the field of the conversion of energy from renewable sources - like the photovoltaic source and the wind energy - in order to reduce costs of the plants themselves, to allow their ready installation, and to facilitate their maintenance.

In a first aspect the present invention thus relates to a radio mobile station according to claim 1.

Preferred embodiments of the invention are set out in the dependent claims.

In the radio base station according to the invention there are included apparatus and plants for the accumulation and the maintenance, that are optimised under the aspect of the regulation and control of the stored charge, and that allow to neutralise and compensate the random components of the operation regime of more generators using different energy sources of renewable energy, these generators having a high variance in the instantaneous generated power levels. In said apparatus, there are included:
i) plants for generating electric energy from renewable sources of different kinds, like aerogenerators and photovoltaic generators, which have a variable power output depending on environmental conditions;
ii) a battery set that co-operates with said plants for generating electric energy, and which is suited to provide a constant power for a predetermined time;
iii) a monitoring device for continuously monitoring said battery set, and suited to prevent malfunctions and to actively interact in a way to maintain an equal balanced charge in each cell.

This new kind of electric energy supply, involving 100% exploitation of renewable energies, is able to cope with the typical electric loads of a base radio station for mobile cellular telephony, and to store a sufficient amount of ampere-hours inside an appropriate battery set.

The energy that is generated in this manner, is distributed in the form of direct current, at a voltage that is regulated by means of power followers (power tracking units) and that is suited to charge battery sets connected in parallel; moreover, the said energy is distributed in the form of AC current, by the use of inverters dedicated to the free cooling and for the common single-phase loads.

The radio base station supplied according to the present invention is totally independent from other energy sources: in exceptional cases, if the remote control system indicates a reduced autonomy (storage battery charged at a level lower than 40% of its capacity), the storage battery is rapidly charged using sets of mobile battery chargers.

On the other hand, it is known that aerogenerators and photovoltaic generators represent electric energy generator types that do not insure a constant power output; instead, they provide a power output that depends on the insolation and wind conditions typical of the installation zone, which vary during the day. Therefore, the battery set is entrusted with a fundamental task in the system, and is able to insure a constant power for a predetermined number of hours that depends on the design choices; it stores the generated energy and outputs this energy when the load requirements render this necessary.

In order to insure the reliability of the batteries it is indispensable to provide a maintenance that aims at a continuous monitoring in order to prevent malfunctions and to control the gradual decrease of the batteries' capacity, by timely issuing an alarm when the capacity has decreased to a point that correct operation of the system may no more be guaranteed.

Therefore, there is provided a monitoring and control system that actively interacts with the batteries, and that is provided with a current source which may be sent to every cell, in order to aid the battery charger and to maintain an equal and balanced charge on each individual cell (equalisation), with a tolerance within 1% of the general average. The same current source is used for the active test performed on the cell, whose response serves to determine not only the electrochemical and temperature state of the battery, but also to check the respective charge status.

Only for illustrative purposes and without limiting in any way the scope of protection of the present invention, the same will now be described with reference to several embodiments thereof, which are illustrated in the annexed drawings, wherein:
Fig.1 is a perspective view of the plant and fixtures related to the system for the exploitation of renewable sources, like solar and wind energies, according to the present invention;
Fig. 2 shows, in principle, a generic functional electric circuit arrangement of the apparatus for the production and the acquisition of the electric energy supplied by the wind energy exploitation plant;
Fig. 3 shows, in principle, a generic functional electric circuit arrangement of the apparatus for the production and acquisition of the electric energy provided by the photovoltaic plant;
Fig. 4 is an electrical circuit diagram of a particular section of the generating-station according to the present invention, including the batteries and the related apparatus for the monitoring and the equalisation;
Fig. 5 is a schematic drawing showing the system for the remote monitoring of the generating-station according to the present invention;
Fig. 6 is a perspective view of the plant and fixtures according to a different structure (embodiment) of the generating-station of the present invention.

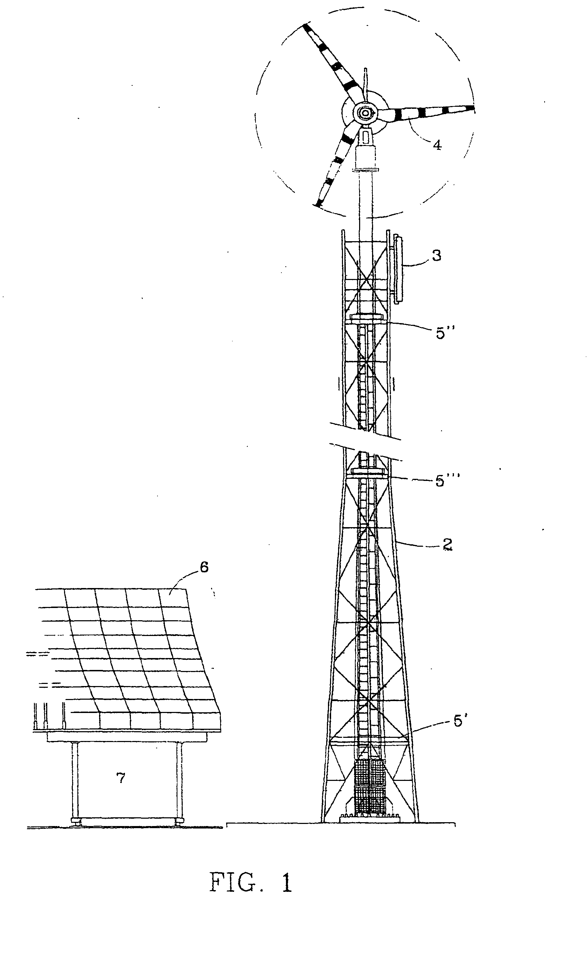

Referring to Fig. 1, there is shown a "macroscopic" general view of the plants included in a preferred embodiment of the present invention. The wind energy generator supporting tower 1 is realised within the trestle 2 which supports the antenna and which is modified both in its structure and its foundations, in order to be suited to form a sustaining structure for the wind energy generator supporting tower 1. The vanes or blades 4 are usually black painted with yellow bands or strips of the reflex reflector type, and they may supply during their motion a wind generator characterised by a power of the order of 15 kw. In the same Fig. 1, besides the antennas 3 which are arranged at the top of the trestle 2, there are shown the retaining and connection structures 5', 5", 5"', which are interposed between the trestle 2 and the antenna supporting tower; these structures make both plants integral with respect to one another, since on the one side the generator supporting tower forms a steel core for the trestle and is mounted on a wide anchor base, and on the other side the trestle constitutes a supporting structure suited to elastically sustain the flexion possibly induced on the tower by strong wind gusts.

The structures which support the antennas may be realised in diverse typologies (trestles, polygonal posts, flanged posts, etc.), selected according to the space available in the particular location, or according to the yard conditions, or finally, according to the processing technologies.

The antenna supporting structure of a typical location considered in the present context, forms a trestle with a height of about 30 m, and which must be modified in order to permit the insertion of a polygonal post designed to sustain the aerogenerator.

The post of the aerogenerator projects beyond (that is, above) the trestle's upper end, by a length of 7 m, its overall height from the base section is equal to 37 m, and it shares with the antenna supporting structure only the basement, which is made of reinforced concrete and whose size must be redesigned as specified below. The loads at the trestle's base, for the check and the size adaptation of the foundations, are matched to the actual loads, but are summed to the loads produced by the post of the aerogenerator, the generator itself, and the additional stresses.

In the following we shall examine analytically the various components of the electric energy generating-station, and starting from the generally known features of these components, we shall emphasise the adaptations and their optimum use in an electric supply system of a SRB (radio base station).

The loads at the base, N, M, T, are considered both in case of frontally directed and diagonally directed wind, and the foundations have been modified by taking account of the positioning and the typology of the existing downward draft extensions with regard to their diameters and adherence lengths.

A preferred trestle typology is based on a plinth forming a "single block" of reinforced concrete, shaped like a frustum of pyramid (with a base), and a quadratic "sole". The added volume has been estimated as being not less than 80 m³.

During the sizing of the plinth widening, which could be required, the contribution made by the lateral soil as a passive thrust could be used, in order to increase the stabilising moment, on condition that a perfect structural connection is made, e.g. by means of a ring of reinforced concrete in which the existing plinth is inscribed.

The above hypotheses are in the ambit of the general case, that is of "normal soil" conditions, corresponding to a soil with features of mechanical resistance and stability which are frequently encountered. Of course geognostic investigations through field tests should be performed.

### Polygonal post for the aerogenerator

The posts are trunk-shaped structures, which are prefabricated in the workshop and are classified according to two categories:
- polygonal - 16 or 18 edges - and tapered, of the coupling type (plug-in type);
- tubular, flanged, and having a constant cross-section.

The polygonal coupling-type posts and the tubular flanged posts, are further subdivided according to the following kinds:
- Heavy posts H 18, 24, 30, and 36 m;
- Light posts H 12, 18, 24, 30 and 36 m.

According to a preferred embodiment of the plant, the post selected for supporting the aerogenerator is a polygonal heavy-type post, of the coupling-kind, and having a height of 30 m.

The post will be connected to the reinforced concrete plinth of the modified trestle, before its mounting.

The connection between the post and the plinth is made using downward draft extensions, whose laying is performed using appropriate templates.

The use of downward draft extensions to be anchored to the existing basement, by means of chemical anchors, is permitted, provided that a calculation report is added, that establishes the adherence capacity and the resistance to stresses N, M, T, which for illustrative and non-limitative purposes - in case of the above mentioned post - are not less than:
N = 5600 Kg.
M = 46,600 kgm.
T = 6140 Kg.

The tower height, that is the height of the supporting structure, is a further design parameter of this project for conversion of wind energy, that may be perfectly adapted to the realisation choices made for the base radio stations for cellular telephony.

In fact, one of the rules that must be observed, is to position the motor at least 10 m above every further important obstacle existing in an area of 100 metres of radius. For small dimensions, it is enough if the height difference from the highest point of the obstacles is equal to at least one rotor diameter.

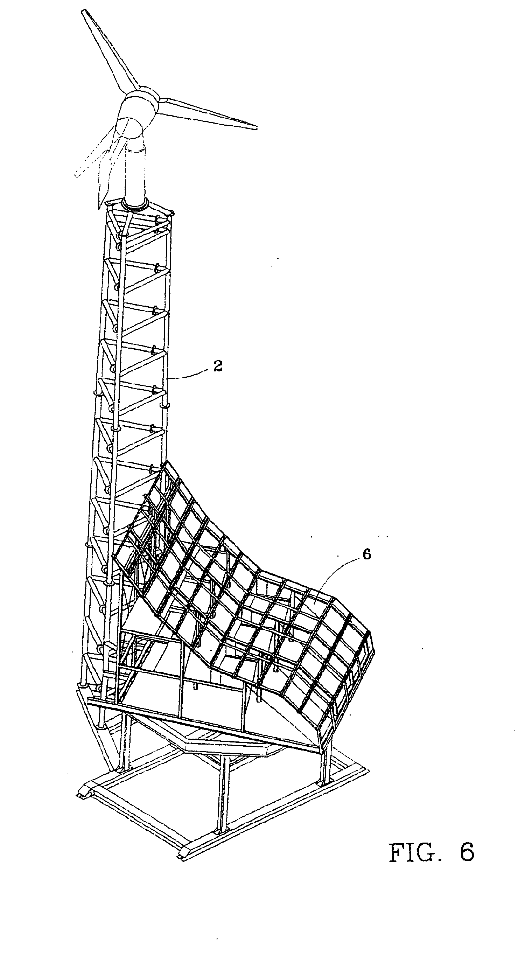

While in a first version - shown in Fig. 1 - the alternator (aerogenerator) supporting post is introduced inside the trestle, and the photovoltaic structure is totally independent, it may be provided that the aerogenerator has an independent structure, as shown in Fig. 6.

### Rated output

An aerogenerator does not always produce the same amount of electric current; on the contrary, it reaches a maximum performance at a certain wind speed. Generally, the higher the wind speed, the greater will be the electric current production. Hence, the available power is proportional to the third power of the wind speed; however, if the velocity of the propeller is not controlled, the generator may be seriously damaged. All manufactures adjust the maximum rotor speed to correspond to a safety value.

### Rated wind speed

This is by definition the wind speed, measured in m/s, or km/h, at which the motor reaches the rated power.

The majority of manufacturers specify the rated wind speed at about 40-50 but a general standard does not exist.

### Rated rotational speed (rated RPM)

This is the number of turns per minute (RPM) performed by the wind rotor at its general rated power; the smaller the wind rotor, the higher will be its rotational velocity (angular velocity).

### Cut in wind speed

This corresponds to the wind velocity at which the motor starts producing electric energy.

### Wind rotor diameter

The wind rotor is used to convert the wind kinetic energy into mechanical energy, which is converted in turn into electric energy, by the motor connected thereto.

The power provided by an aerogenerator, is always proportional to the area which is swept by the vanes (blades).

### Number of vanes

On a rotor of given diameter, the vane number directly influences the motor efficiency: this is an essential element in the design of an aerogenerator. For a given type of blades, the higher the number of blades, the greater will be the moment transmitted to the wind rotor shaft.

### Airfoil section of a blade

The airfoil section is the contour of a blade or vane, in a cross sectional plane orthogonal to its axis.

Manufacturers use two types of airfoil sections (airfoil profiles): a traditional one and another one, which for simplicity we will call "toy windmill profile". The traditional airfoil section resembles that of an aeroplane wing, which is curved on one side and more or less flat on the other.

The toy windmill profile, which is bulged, is characterised by the fact that its two faces follow more or less parallel lines which go into a spin along the axis: it may be easily formed by extrusion.

The differences between both types of profiles are of three kinds and they concern the efficiency, the noise, and the production cost.

### Lateral thrust

It is the maximum horizontal thrust which is exerted at the apex of the structure and is due to the effect produced by the wind generated by the wind/rotor interaction. It increases as a function of the surface which is swept by the wind rotor. This is a very important parameter for what concerns the choice of the post, the kind of plinth, and the windbracing system.

### Control devices

These devices protect the propeller from strong winds and the runaway speed of the wind motor. These devices are required for two reasons:
1. A functional reason, to protect the generator against overheating and overproduction;
2. A safety reason, to prevent the breakage of the propeller in case of strong winds.

These control mechanisms may be classified in three categories:
- aerodynamic control;
- reduction of the surface which is effectively swept by the wind rotor;
- modification of the vane adjustment angle.

In fact, the aerodynamic control is an inherent feature of any kind of airfoil profile. For a given angular velocity, when the wind speed increases, the angle of attack "seen" by the rotating blade increases also, so that the blade will eventually have its profile aligned with the dominant wind stream and thereby reduce its angular velocity: that is, the propeller converts less energy but does not reach critical velocities.

In order to reduce the area which is swept by the wind rotor,
a) the angle formed by the rotation axis of the blades and the dominant wind direction is increased;
b) the angle formed by the rotor plane and its shaft is reduced;
c) the rotor is displaced from the dominant wind stream, being rotated to one side and tilted upwards.

Proceeding according to point c), the wind pressure acting on the wind rotor is exploited, to put it out of service, but nothing is adjusted, since the device puts the generator totally out of service.

Proceeding according to point b), a very safe system is provided, that continues to produce energy, but very flexible blades must be utilised.

Finally, when using the system a), a good regulation is achieved, although expensive mechanical means are required.

### Regulation velocity

This is the wind velocity at which the adjustment device is fully active.

### Net load at the upper end of the supporting tower

This is the total load (in Kg), that can be supported by the tower: it corresponds to the mass of the whole nacelle, which therefore includes the wind rotor, the generator, the steer, the steering device, the transmission shaft, and the control devices.

### Kinds of electric generators employed in a wind energy system

These are essentially of three types:
1) alternator with permanent magnets;
2) dynamo (direct current, DC);
3) "brushless" alternator.

A preliminary analysis of the advantages and drawbacks of each of these kinds of generators is considered useful.

Electric energy is generated when an electric conductor is moved in a magnetic field:
electric current is induced in the conductor as a function of the conductor's velocity with respect to the magnetic field, and as a function of the latter's intensity.

In alternators with permanent magnets, the magnetic field is constant and stationary. These alternators are much lighter than other kinds of generators where the excitation circuit is formed by a ferromagnetic core and a cooper wire winding traversed by a direct current used to generate the magnetic field.

Permanent magnet alternators produce an electric current and voltage that have a frequency proportional to the angular velocity. This implies that it is impossible to directly connect to such generators, electrical apparatus that operates at 50 Hz.

In order to be able to utilise these generators, it is necessary to convert this current into a direct current, e.g. with the aim to charge batteries, and then to convert the energy that has been stored, using an inverter, into an alternate current (corresponding in Italy to a frequency of 50 Hz).

Some manufacturers are of the opinion that permanent magnet alternators are - due to their simplified construction - the best kinds of machines that can be applied to wind energy conversion machines.

The maintenance of a dynamo is more complex in that the brushes must be replaced after about 6 years.

For manufacturers, the real advantage of alternators having permanent magnets, is their relatively low cost. Actually, these magnets are considerably less expensive than the above mentioned excitation circuit comprising the ferromagnetic core and the copper windings.

This kind of machines also has advantages with regard to the user: the dynamic braking, and moreover, the generation of an alternating current that - as compared to the direct current - may lead to savings in the distribution of electric energy to users. However, in contrast with alternators (generators) with variable excitation, a ferromagnetic core, and copper windings, permanent magnet alternators have the drawback that they always generate the same magnetic field of constant intensity, whereas the magnetic field produced by alternators with variable excitation is proportional to the direct current flowing through the winding, which in turn depends on the voltage applied at its ends.

In other words, and simplifying the discussion, the higher the voltage being applied at the inductor's ends, the more current will flow and the greater will be the associated magnetic flux. This means that the magnetic flux increases as a function of the angular velocity of the wind energy conversion machine.

The advantage of variable excitation alternators is their easy "pickup" (acceleration) in case of feeble winds, since the magnetic flux of the inductor - which is essentially zero when the rotor performs only a few turns -, increases more and more when the winds become stronger, until a nominal velocity is reached.

The dynamo (DC) generates energy with a power that follows a cubic law (third power of the wind velocity): if the wind velocity doubles, the output power increases by a factor of eight.

In contrast, permanent magnet alternators have a constant magnetic flux, independently of the angular velocity of the wind rotor. Therefore, the wind rotor is more difficult to start.

Moreover, the alternator has the maximum efficiency only in one point of the power curve; all other points of this curve are only a compromise, which is particularly penalising in case of feeble winds or winds of medium strength; this is in fact the major limitation in the application of aerogenerators with permanent magnets.

To solve this problem, manufacturers that use permanent magnet alternators have designed their propellers so as to increase the moment (couple) during the start, so that the rotor may start turning even in presence of feeble winds. This kind of propeller has nonetheless some drawbacks concerning the aerodynamic efficiency for stronger winds. It is also true that the dynamos are much more expensive than alternators with permanent magnets.

As concerns the brushless alternators, these are considered the best solution, since they include both the advantages of the dynamo and those of the alternator with permanent magnets.

In fact, they have a variable excitation circuit, and no brushes;
their power curve is similar to that of a dynamo.

However, these alternators are more expensive than dynamos and permanent magnet alternators.

### Cost per unit power

This is the cost of the aerogenerator divided by the its rated power measured in W (watt) or in kW.

This is a parameter of minor importance for this kind of energy, and which could moreover lead to some confusion. In fact, besides the considerations made with regard to the rated velocity assumed by the manufacturer, it is necessary to avoid to make unjustified comparisons; for instance, the cost in kW of a generating set may seem at first sight very advantageous, until the balance of the energy produced with the fuel shows the contrary.

The generating set for producing energy consumes non renewable fuel such as oil and its derivatives, and therefore has a continuous cost which is proportional thereto; any apparatus that exploits renewable energy (e.g. solar or wind energy) does not consume anything for all its service life, and therefore no costs are incurred.

In general, all projects involving a renewable energy source require greater investments than projects involving the use of fuels, but then the expenses are nearly zero.

It is important to make a complete economical analysis of the investments, by including the capital, the expected life of the apparatus, and the cost of the production of the electric energy in both alternatives compared to each other: use of fuels and use of renewed energy.

### Estimate of the energy produced on a monthly basis

Energy output: this is the energy produced by a wind of medium strength, in the velocity interval from 16 to 20 km/h.

The annual production of the system, divided by the investment cost, is an essential element for a comparison between these different "energetic options".

This parameter determines a large part of the value and the utility of the investment. In a preferred embodiment of the invention, the renewable (wind) energy generation system comprises the following: an aerogenerator with a rated power of 15 kW, formed by:
a "nacelle" with a rotor;
a supporting post;
mechanical transmission means for realising the connection between the rotor and the electric energy generator which is integral with the supporting post;
an electric energy generator of the synchronous type, with an independent excitation;
an electric control panel for protecting and sectioning the electrical power line;
an external electric panel to be installed in proximity of the QE/ER, where the electric energy conversion devices are located;
an autotransformer;
an AC/DC converter;
a regulator for the excitation circuit of the generator and the control of the AC/DC converter in order to achieve a voltage regulation during battery charging.

The energy that is converted by the aerogenerator is used to charge the batteries, in the following way:
- the energy produced by the generator is transferred to the batteries through a regulator and a static AC/CC converter;
- an automatic and continuous control of the voltage and battery charging current is performed, according to the charge condition (charge state) of each battery cell, while effecting at the same time a correction of the control parameters with respect to the battery temperature;
- in case of overproduction of the aerogenerator (strong wind or charged batteries), in order to prevent an excessive velocity of the rotor the excess energy will be dissipated by a resistance.

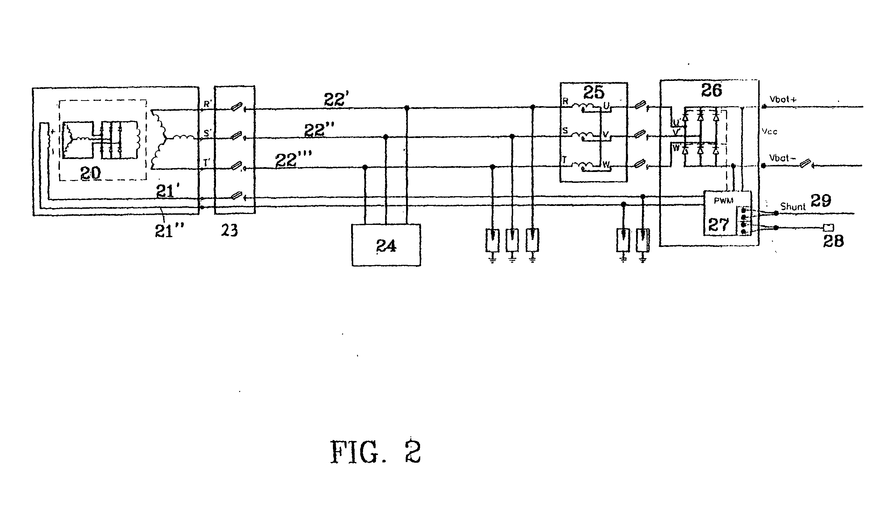

With reference to Fig. 2, there is shown a generic electrical circuit arrangement for the aerogenerator which co-operates with the batteries through the respective battery charger.

The rotor 20 which is directly actuated by the blade motion is interconnected to an excitation circuit 21', 21" and to a power circuit 22', 22", 22"' by means of a sectioning device 23. On the other hand, for the regulation of the energy that is generated in the unit of time, the power circuit is directly connected to dissipation resistances 24.

The various parameters involved in the following discussion are:
Vs't': phase voltage at the generator output;
Vuw: phase voltage at the transformer secondary winding;
Vst: phase voltage at the transformer primary winding;
Vu'w': phase voltage at the rectifier input;
Vcc: continuous voltage at the rectifier output;
Vbat: voltage at the battery terminals.

The power circuit applies the phase voltages present at the generator output to an autotransformer 25, which are than fed to the input of a battery charger/rectifier 26 at whose output a direct voltage Vcc is obtained, useful for charging the battery.

The rectifier 26 is controlled by a regulator PWM 27 which operates according to acquired data relative to physical parameters obtained from the batteries, as determined by the battery temperature sensor 28, and the shunt 29 - which measures the sum of the electric currents inside the batteries, the latters being provided in the present realisation according to a double series arrangement.

The best sizing of the aerogenerator is obtained according to the following calculation procedure:
air mass per second that transits through the frontal area of the propeller m = d*S*Vm;
rated velocity V= 12.517 m/s;
air density d= 1.225 kg/m³;
diameter of the rotor D= 7.315 m;
mass m = 644.441742 Kg;
kinetic energy E=50.485.218 J;
corrected power (Betz) W=29917.1662 W;
propeller efficiency 87%;
multiplier efficiency 90%;
generator efficiency 98%;
regulator efficiency 98%;
rectifier efficiency 78%;
total efficiency 59%;
simultaneity coefficient of the efficiency maxima 0.85%;
efficiency by input-output test 49.85%;
useful power P=14915.8462 W.

This power will be available only when the wind blows at about 45 km/h, and this occurs on average 73 hours in a year.

The expected energy at this speed equals 1.116 kWh/year.

By performing a new calculation for the generator, for a speed of 5.5 m/s (20 km/h), instead of the rated velocity, the useful power will be P=1444.90 W.

This power will be available only when the wind blows at about 20 km/h, and this happens on average 7245 hours per year. The expected energy for this velocity is about 5627 kWh/year.

When repeating the calculation for the generator, no more at its rated speed but at a speed of 8.33 m/s (30 km/h), the useful power (effective power) will be P = 4413.74 W.

This power will be available only when the wind blows at about 30 km/h, and this happens on average for 1277 hours in a year.

The expected energy at this speed is about 5627 kWh/year.

In conclusion, on a total of 8860 hours in a year, this generator - having a diameter of 7.3 m - is able to produce for the standard specific location, an energy of 17243 kWh.

In particular, the aerogenerator at issue is of a kind comprising a rotor with three blades (vanes), with an automatic regulation of the load generated by the wind, and producing a mechanical conversion of energy into electrical energy by the use of a synchronous motor with independent and adjustable excitation; power: 15 kW.

As already mentioned, the charge regulator 27 operatively decouples the aerogenerator from the batteries, and provides for the following:
it stabilises the aerogenerator operation at the point of the voltage-current characteristic curve where the generated power attains a maximum;
it controls (adjusts) the voltage and the current at the output of the generator, depending on the battery charge status and the load requirement.

The regulator 27 operates according to the values of the charging current 29 and temperature 28 of the battery, and acts on the excitation of the synchronous generator and on the static converter AC/DC, by adequately controlling the value of the voltage. In practice, on the one hand it draws the power from the wind by means of the aerogenerator, and on the other, it stores this energy in the batteries based on the capacity, the charging status, and the temperature of each cell, by using the PWM technology, so as to bring the battery charge level as much as possible near to a its 100% level, without damaging the batteries.

This is a listing of the technical features of the regulator:
protection against polarity inversion and transient overvoltages (generator's side and batteries' side);
control of the charging voltage of the batteries (PWM, pulse width modulation);
output current electronic limitation;
batteries charging process according to three selectable modalities: Bulk Charge, Acceptance Charge, and Float Charge;
batteries equalisation function deactivable;
temperature compensation;
external shunt for the measurement of the effective battery charging current.

### Operation of the regulator in the Bulk Charge modality

The bulk charge is performed for a battery charge level which is less than 70%, by forcing into the batteries the maximum current they can accept. The electronically effected limitation of the electric current value prevents an excessive charging, which could lead to a reduction of the battery's average life.

### Operation of the regulator in the acceptance charge

After the bulk charge modality, provided that the residual battery's capacity is comprised in the interval from 70% to 95%, the regulator imposes a constant voltage to the batteries, which is a function of the number of series-connected batteries and of their temperature (57.2 [V] at 25 DEG C). When the current that is accepted by the batteries falls below 47A (batteries' rated capacity 4680 Ah), the regulator switches to the float charge modality.

### Operation of the regulator in the float charge

During float charge, the regulator imposes a float voltage of 53.2 [V] at 25 DEG C, with a current of 4-8 A (batteries' rated capacity 4680 Ah); when the current that is accepted by the batteries increases, the system returns to the bulk charge or acceptance charge modalities respectively.

The regulator operation must be of a selectable kind, that is, it must be possible to determine which charging modes it must use, the transition set points from one charging mode to the next must be settable, it must be possible to exclude the equalisation charging (the batteries' equalisation is performed by an additional system), the different charging modes must be determined depending on the charge that can be accepted by the batteries (and not on the voltage), and the regulator should measure the effective charging current to the batteries, by means of an external shunt.

### Temperature compensation

The voltage during the acceptance charge and float charge modes are dependent on the cell temperature, and the regulator must automatically vary these values with respect to the pre-set values, so as to not reduce the batteries' average life.

Fig. 1 also shows an advantageous position chosen for the photovoltaic (solar) panels 6, which are arranged on the roof of a shelter 7, that is normally present in a radio station used for mobile cellular telephony.

Besides the favourable position offered by the exposition of the shelter's roof, in the present context it is also useful to specify the operative conditions of the photovoltaic system in case of a preferred embodiment. This system is connected to the electric control panel for the renewable energy, abbreviated QE/ER, which in turn provides for the charging of the battery set and for the feeding - through the inverters - of the AC loads (apparatus), by means of a distribution panel (QE/D) located in the SRB (abbreviation for base radio station) normally inside a shelter. Electric lines start from the panel QE/D and reach the general modified panel of the radio base station, said lines being used for feeding the various apparatus at a voltage of 48 Vcc.

The system in question comprises three photovoltaic generators, and each generator comprises in turn:
a field of 16, 64 Watt-photovoltaic panels, that are connected in four rows arranged in parallel, each row being formed by four panels connected in series; a regulator for the battery charging.

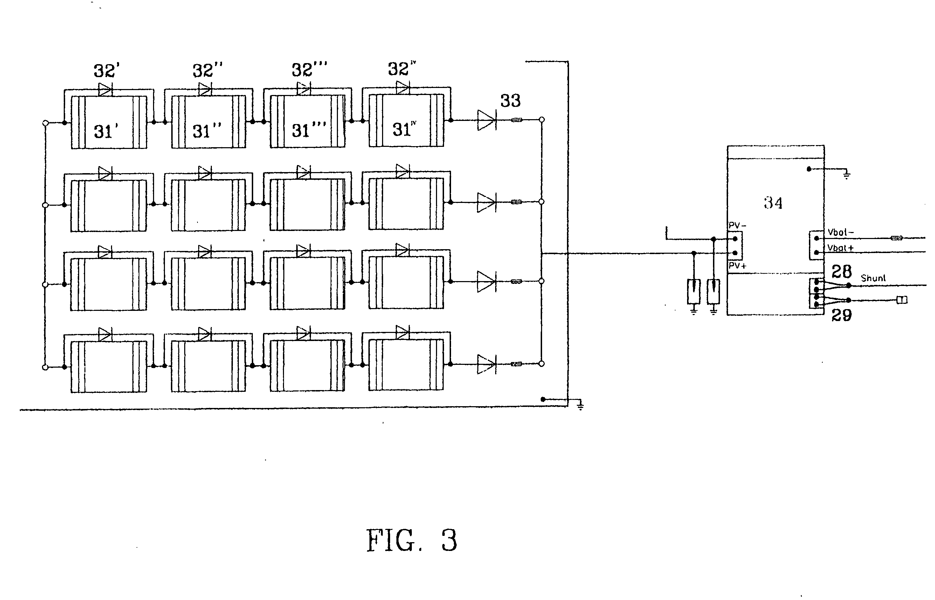

In particular Fig. 3 shows a schematic representation of a single photoelectric generator, according to the present invention, which is interfaced with a dedicated regulator (e.g. of the kind named Solar Boost 3048 PL800).

As already mentioned, in the preferred embodiment there are provided four panels 31', 31", 31"', 31"" for each row, each being provided with its own by-pass diode 32', 32", 32"', 32""and each series comprising four panel rows. The generated power is furnished by usual protection elements 33 to the batteries, by means of the control circuit 34 that performs a PWM-type regulation on the battery side, and a MPPT regulation on the side of the photovoltaic generator. The regulation is based on the data that are acquired, which relate to physical parameters obtained form the battery set, like those detected by the batteries' temperature sensor 28, and by the shunt 29, which measures the sum of electric currents in the batteries provided for in the described embodiment, that includes a double series.

The regulators 34, the grounding system and the sectioning and protection devices for the photovoltaic generators, are installed on external electric panels to be arranged in proximity of the QE/ER.

The energy that is converted by the photovoltaic generator will be used for charging the batteries, as follows:
the energy produced by the photovoltaic generator is transferred to the batteries by means of a static converter CC/CC;
the voltage and the charging current in the battery are continuously and automatically controlled, based on the charge condition and operation condition of each cell, by performing a compensation of control parameters with respect to the battery temperature.

Considering in detail the electric connections of the photovoltaic system, each photovoltaic generator is connected to the batteries and the load through a dedicated regulator 34.

This regulator decouples - under the operative point of view - the photovoltaic generator from the batteries, and provides for the following:
- it stabilises the operation of the photovoltaic panels at the point of the voltage-current characteristic curve, where the value of the generated power attains its maximum;
- it regulates the voltage and current at the output of the generator, depending on charging condition and load requirements.

Below, a list of technical features of the regulator 34 to be coupled to each photovoltaic generator, is given:
- maximum power point tracking circuit (MPPT maximum power point tracking),
- protection against polarity inversion and transient overvoltages (panel side and battery side),
- control of the batteries' charging voltage, PWM (pulse width modulation),
- limitation of output current by electronic means,
- batteries charging process, performed with three settable modes; Bulk Charge, Acceptance Charge, and Float Charge,
- batteries equalisation function, that can be disabled,
- temperature compensation,
- external shunt, for measuring the actual battery charging current,
- voltage for float charge, less than voltage for acceptance charge.

### Maximum power point tracking circuit (MPPT)

The regulator must be provided with a maximum power point tracking circuit:
the photovoltaic panel is a current generator, as may be inferred from its characteristic curve, whereas the batteries are voltage generators, so that a matching is necessary between both devices in order to obtain a maximum energy transfer.

A row with four panels (type UFLEX US-64), in presence of usual insolation conditions, has the following features:
- peak power (Wp), 256 W
- short circuit current (Icc), 4.8 A
- open-circuit voltage (Vo), 95.2 V
- voltage under load at maximum power (Vmp), 66 V
- maximum power current (Imp) 3.88 A.

In the 'Bulk Charge' charging mode of a 48 V battery, a regulator which does not include the MPPT circuit would transfer energy to the battery at a power of 4.5[A] x 48 [V] = 216 [W]; instead, by using an MPPT circuit, the power is 3.88 [A]x 66 [V] = 256 [W], with obvious advantages under the aspect of the efficiency.

The regulator provided with the MPPT circuit draws the maximum possible power from the photovoltaic panels, and at the same time it stores this energy in the batteries based on the capacity, the charge status, and the temperature conditions of individual cells, by using the PWM technology in order to bring the charge level as much as possible near to the 100% value without damaging the batteries.

### Bulk Charge

Bulk charging is performed when the battery charge level is less than 70%, by forcing in the batteries the maximum current they are able to accept. The limitation of the current value, that is obtained electronically, prevents the eventuality of an excessive current and a consequent reduction of the batteries' average life.

### Acceptance charge

After completion of the bulk charge mode, and when the batteries' residual capacity is between 70% and 95%, the regulator imposes a constant voltage to the batteries, which is a function of the number of cells that are connected in series, and of their temperature (57.2 [V] at 25 DEG C). When the batteries' acceptance charge falls below 46 A (batteries' rated capacity: 4680 Ah), the regulator switches to the float charge mode.

### Float charge

In the float charge mode, the regulator imposes to the batteries a float charge of 53.2 [V] at 25 DEG C, with a current of 4-8 A (batteries rated capacity: 4680 Ah); when the current that is accepted by the batteries increases, the system returns to the bulk charge mode or the acceptance charge mode.

The regulator is "settable", that is, it must be possible to determine the charging modes it uses, it must be possible to set the transition set-points from one charging mode to the next, it must be possible to exclude the equalisation charge (the equalisation of the batteries is entrusted to another system), the different charging modes must be determined depending on the battery's acceptable charge (not from its voltage), and lastly, the regulator must be able to measure the effective charge current in the battery by using an external shunt.

### Temperature compensation

The voltage in the acceptance charge mode and in the float charge mode are functions of the cell temperature, and the regulator must vary automatically these values with respect to pre-set values, in such a way as to safeguard the average life of the batteries.

### Maximum short circuit current in the photovoltaic panels

In compliance with the rules, the regulator must be designed to operate with 125% of the rated capacities of the photovoltaic panels, under standard conditions, so that the regulator must be able to accept a group of panels with a maximum short-circuit current of 24 A under standard conditions; in the same way, all circuits located downstream of the regulator must be designed for a value of electric current equal or greater than 40 A - even if not explicitly indicated -, in compliance with the criterion adopted by the same rules that do not - however - refer to the devices using the recent MPPT technology.

In the following, the qualitative features of the storage battery for the renewable energy plant according to the present invention will be examined in turn.

As stated above, the new kind of electric energy supply, using 100% of renewable energy, one part of which is generated in a photovoltaic manner (17 % of the maximum supplied power) and the other part by exploiting the wind energy (83 % of the maximum supplied power), is able to cope with electric loads of the base radio station (SRB), including the possibility of storing the energy in an appropriate battery set.

The energy generated in this way will be distributed in the form of a direct current, at a voltage regulated by the DC/DC converters, suited to charge a battery set of 4680 Ah and 48 V and suited to supply alternating current by using the inverters.

The whole system is locally monitored through a remote transmission of the principal signals and of the alarms.

Under preferred operative conditions, the storage battery in question is connected to the electric panel of renewable energy supply, which provides for its charging by means of renewable energy generation systems, and at the same time, for the supply of the AC electric apparatus, by using inverters and a distribution panel located inside the SRB.

Starting from the latter panel, electric lines reach the modified general panel of the base radio station, these lines being used to feed the apparatus at 48 Vcc In the actually employed embodiment, a set of batteries has been installed that includes ninety-six elements, each formed by a single cell of 2 V and 1170 Ah; these elements are connected in series and in parallel to obtain a rated voltage of 48 V and a capacity of 4680 Ah.

The batteries are of the kind including a gel-fixed electrolyte, with valve-regulated elements, not requiring any maintenance and specifically used in telecommunication applications.

### Batteries' management I

In order to guarantee the reliability of the batteries, a maintenance aimed at providing their continuous monitoring is indispensable, in order to prevent any malfunction and to control the gradual decrease of the capacity of the batteries, and to provide an immediate warning when this capacity has decreased to a level that no more guarantees a correct operation of the system. Therefore, a monitoring and control system is used, which actively interacts with the batteries and which is described below. On the other hand, in the practical realisation the constituent parts of the storage battery must satisfy some constructive requirements:
- all electric panels must allow access and inspection from the front side;
- the connections towards the system to be supplied, and the parallel connection between several batteries, must be performed by means of adequate panels (boards) or distribution boxes, both from below and from above, in separate raceways;
- the cooling of the boards and of the apparatus may not be effected by forced ventilation;
- the energy produced by the aerogenerator is transferred to the batteries by a AC/DC regulation and conversion system in order to be able to transfer a maximum amount of energy depending on the production and the electric current absorption;
- the continuous automatic control of the charge condition and operative condition is performed on each cell of the storage battery;
- the storage battery is monitored as explained above, and the charge status and operation conditions of the cells is also monitored, with a remote control of the principal parameters and of the alarms, regarding the storage battery itself, the battery chargers, the aerogenerator, and the photovoltaic field.

Finally, the energy that is stored in the 4680 Ah battery is distributed to the DC apparatus (loads), or else it is converted to a 50 Hz current - using the inverters -, for AC apparatus (loads).

Moreover, alarms are sent in the following circumstances:
- when the battery charge status corresponds to less than 40% of its capacity (4680 Ah), in order to allow a timely recharge intervention to be made with a battery charging set of 10-17 Kw; - in case of degradation of some of the battery cells, the latter being unable to perform the usual operations of charging and discharging of energy.

These and further control operations are managed by a local PC that is able to send digital signals.

The remote interface and control system that is provided for the continuously operating generating-station used for generating electric energy from renewable sources (like photovoltaic and wind energy sources), according to the present invention, has essentially the task of controlling the interaction between a wind energy generation system, a photovoltaic field, and a storage battery. These systems are interfaced to the SRB in order to supply the electric energy to the apparatus (loads) of the SRB itself.

As mentioned above, the renewable energy system (abbreviated SER), must totally replace electric energy sources that presently supply energy to radio base stations, by converting solar energy and wind energy and by providing a dedicated battery set able to cope with a possible temporary renewable energy lack.

Since the system is a renewable energy exploitation system, it is necessary - as already specified - to remotely monitor the operation of the system itself by checking the battery charge.

Besides the already mentioned alarms, related to the battery charge status, there are provided further analogue signals that are sent by the photovoltaic field, the aerogenerators, and the SRB, that relate to ambient temperature and possible intrusions. Therefore, provision has been made to remotely handle these signals, by using an appropriate central unit that is suited to receive and send them, via the GSM route, to one or more control locations.

The system that best satisfies theses needs, has been specified below, and has been identified by the shorthand notation INTCR.

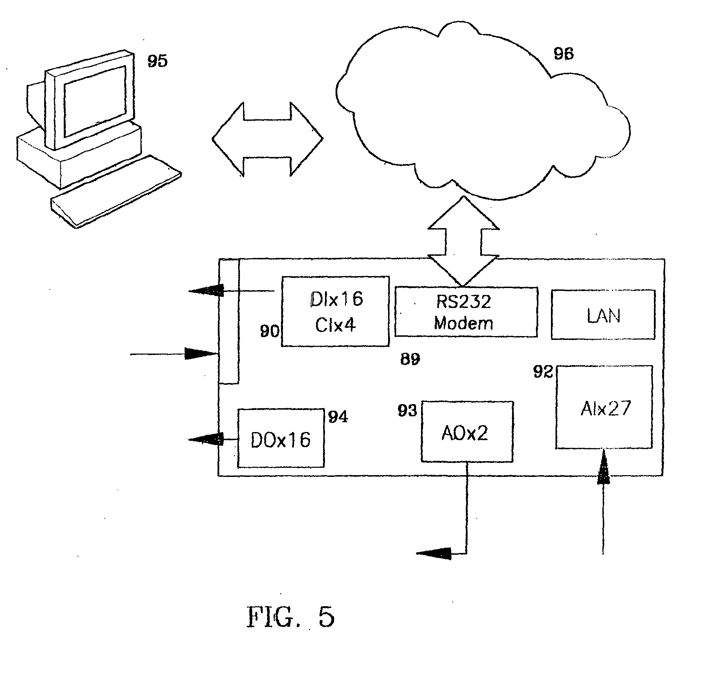

Fig. 5 shows the INTCR system architecture. It represents a monitoring system whose central unit 89 directly manages the following:
- up to 16 digital inputs (DI) and up to 4 counter inputs (CI) 90;
- up to 27 analogue inputs (AI) 92;
- 2 analogue outputs (AO) 93;
- 16 digital outputs (DO) 94.

The central unit allows the 'in situ' management of all monitored data, and permits to forward this information to a possible supervision centre 95, by using a communication network 96.

The central unit comprises:
A) a simple man-machine interface, embodied by a display and a keyboard, allowing to examine the actual data and the data that are stored in the files;
B) a non-volatile storage (that preserves stored data even in absence of a voltage supply), where the following is memorised:
   - the installation status of the plant;
   - the history file of all changes of the status of all inputs - including the respective hour and date (alarm, pre-alarm, signalling);
   - the history file of all values of sensors-transducers sampled during the activation period;
C) means for performing a continuous analysis (scanning) of all network-connected peripheral devices:
   - measurement and analysis devices operating with direct or alternating current;
   - devices for the automatic reset of the distribution panels (distribution boards).

There is provided the possibility of a direct connection to a personal computer, for a local management, or alternatively, the possibility of connection to a modem for a remote management (supervision centre).

The power supplies of the system INTCR provide for the use of a battery chargers and a buffer battery, for insuring the operation of the central unit, also in case of a temporary lack of external power.

Families of dedicated - that is specific - power supplies are used, in case standard detectors are installed in the plant (e.g. smoke, water, and gas detectors), including buffer batteries for insuring the operation in the eventuality of a black-out.

The system of dedicated interfaces for data transfer comprises:
- an interface for peripheral devices 95, wherein this interface is utilised in order to insert additional devices in the data collection network: for instance, AC current analysers, DC current analysers etc. (an important feature is to insure electrical insulation between the various peripheral devices, thereby rendering the network to a high degree exempt form noises or disturbances); an interface for the modem, which is used to transfer data of the central unit, - through the modem -, to a possible supervision centre;
- an interface for Ethernet networks, which is used to transfer data of the central unit, through an Ethernet network with communication protocol TCP/IP, to a supervision centre, if any.

The monitoring and equalisation centre, according to the present invention, is suited to control the charge and discharge conditions of the battery set that has been defined above.

As described above, during normal operation the battery set is connected to the electric panel (electric board) for renewable energy, QE/ER, that provides for the charging of the battery set, by using the generation systems of renewable energy, and moreover, for the supply of the apparatus (loads), - that must be supplied with alternating current (AC) by means of inverters-, through the intermediary of a distribution board (QE/D) located inside the shelter.

The battery monitoring system is installed in proximity of the battery.

A battery set formed by 96 elements will be installed, wherein each element is formed by a single cell of 2 V and 1170 Ah; these elements will be connected in series and in parallel, so as to provide a rated voltage of 48 V and a capacity of 4680 Ah.

### Batteries' management II

In order to insure the reliability of the batteries, it is indispensable to provide a maintenance which aims at a continuous monitoring, so as to prevent any malfunction, and to control the gradual decrease of the batteries' capacity by immediately sending a warning when the latter have reached such a low level that a correct operation of the system may not be guaranteed any more.

Therefore, there is provided a monitoring and control system that continuously interacts with the batteries; this system includes a current source that may be connected to every cell, so as to aid the battery charger to maintain an equal and balanced charge in each cell (equalisation), with a tolerance within 1% of the general average.

The same current source is used for the active cell test, whose response serves to determine not only the electrochemical condition and temperature of the cell, but also to check the respective charging state.

The normal life of a sealed lead battery (VRLA) is limited by the active lead amount that is available on the surface of the positive plate, and by the electric charge intensity that is available between the active lead and the electrolytic acid.

The corrosion of the material forming the positive plate produces a gradual capacity loss, until the need for a replacement of the battery arises. This process of capacity reduction is accelerated each time the battery is discharged, or when the temperature increases.

The batteries that are specifically constructed for storing energy obtained from photovoltaic systems, have a sufficient amount of lead to allow frequent discharges, but they have a short average life unless the values of the charging/discharging current are controlled (three to four years).

In this particular kind of batteries the plates and the supporting grids have been constructed for a well defined number of discharge cycles, and for a well defined energy storage capacity. The end of the life of a battery is defined as the incapacity of at least one cell to maintain the rating voltage for at least 80% of the rating time. Premature cell failure may occur because of a short circuit or an open circuit between the positive and negative plates, or for mechanical and electrochemical reasons.

The capacity of a battery is determined by the active lead area that is present on the plate, and by the concentration of sulphuric acid which is in intimate contact with the active material. If the active material is subject to sulphation, this effect being increased with ageing, or if the acid concentration in the electrolyte (measurable with the use of densimeters) has decreased, the capacity is decreased. If temperature increases, the capacity will decrease in a manner proportional to the corrosion of the active material.

In order to increase the capacity it is possible to connect more cells in parallel; moreover, since each lead cell generates a voltage of 2V, several lead cells are connected in series to reach the desired voltage (24 elements of 2 V each, connected in series, will be necessary to obtain a battery of 48 V). The conventional method used to charge a row of cells that are connected in series consists in applying a constant voltage at its ends. The charging voltage is raised until a charging current flows through the battery.

If a battery comprising 4 cells of 2V each, is connected to a supply voltage (charging voltage) of 9V, and the cells are perfectly identical to each other, then the same voltage - equal to 2.25 V - is applied at the ends of each cell. In practice, however, there are many variables that modify this ideal distribution law. The most common variables are: the charge state, the temperature, and the impedance of each cell.

The traditional method of equalisation of the charge state between the cells, is to increase the common charging voltage for various hours and at fixed predetermined intervals. In so doing, however, an overcharging of the already fully charged cells is produced, and this causes a loss of electrolyte solution and the generation of hydrogen gas.

In this state the sealed batteries will suffer from leakage of a certain amount of electrolyte, and consequently their capacity will decrease, whereas the traditional open-pot batteries must be topped up with liquid (however, the solution will remain layered for weeks before becoming homogeneous).

The introduction of distilled water also introduces impurities.

Every new variable introduced in the charging equation renders more difficult the common charging method used for equalisation purposes. The preferred method, in order to be sure that each cell is charged in the same way, is to individually charge each cell having a too low voltage, until it reaches the full charge.

This solution of individual cell charging prevents the above described drawbacks. The approach involving an automatic process, allows the permanent measurement of the cell voltage, while a dedicated software determines and updates the average of the ideal cell voltages.

Once a balanced deviation threshold has been established with respect to the average 1%, the system will apply an overvoltage to each individual cell whose voltage has fallen below this threshold. In so doing, the voltage of the relevant cells will be automatically increased, with a consequent redistribution of the common battery charging voltage, until all cell voltages will fall within the preset deviation threshold.

There are two commonly used control methods for batteries.

The most widely diffused method consists in discharging the battery and checking the discharge time on the load, at constant current.

During the discharge process, chemical energy is converted in electrical energy inside the cell, at a rate depending on the connected load. If the cell is weak, due to the high internal impedance, the low charge level, or the low temperature, the voltage at the ends,of the cell will surely be lower than that of the other battery cells. If a cell is charged and discharged during the float charge mode, the battery charger - adjusted at constant voltage - will act against the voltage reduction, by providing a compensation current which generates confusion in the results.

The test interval between the discharges must be long, otherwise the life cycles of the battery will be reduced.

An alternative and preferred method consists in charging the cell and in monitoring the time as a function of the voltage applied to the terminals: this is the inverse process, in which electric energy is converted in chemical energy.

If the cell is weak, the voltage at its ends will increase more than that on the other cells in response to the charging current.

The increase of cell voltage does not act against the compensation effects of the regulation of the constant voltage battery charger.

This active test method uses the same isolated charging current that has been described above and that provides for a charge balancing between the cells. The result obtained by this method may be easily applied to each cell, using appropriate software and appropriate algorithms.

Taking into account the fact that a backup battery must remain in a state of relative equilibrium, the values obtained from the monitoring will be processed by the computer and compared with sensitivity threshold trends that generate alarms each time an instability problem arises, which is due to changes in the charging state, in the integrity of the connections, or in the internal impedance and temperature.

Each time a battery is put into service, it is possible to memorise the actual response to these events of each individual cell, and to plot curves that correspond to their real performances.

The automatic control system may be programmed in accordance with the curves that relate to specific performances of each individual cell during an event, and the control system may also be updated with the real load data, when the load varies. This information is extremely important for the technical staff that must face emergency situations, since it is derived from actual data.

The permanent recording of events, performed by the automatic control system, provides real (actual) data of the battery in Ah (ampere-hour), that may be used for determining the guarantee of the battery with its manufacturer.

The economic value of an automatic battery control system may be evaluated with regard to the risk of battery failure.

The actual data demonstrate that cells provide premonitory indications about their possibility of failure. All these "symptoms" could not be collected by passive systems of periodical monitoring.

In the following, the technical specifications of the battery monitoring and equalisation system are listed for a particular embodiment:
- individual cell charging;
- active tests on individual cells, for the evaluation of the electrochemical condition, the thermal state, the residual charge (automatic test, battery discharge test, response test, charge balancing of the single unit);
- storage of the effected test results;
- monitoring and storage of discharge events;
- control of two rows of 24 single blocks units, each row being formed of single unit having two cells of 2 V;
- possibility of expansion, up to two rows of 24 single units each, wherein said single blocks individually include six cells of 2 V;
- possibility of setting the allowed unbalance for individual cells, that is adjustable up to a value of 1% with respect to the average voltage value of a row;
- Hall sensor, for measuring the charging and discharge current of a battery;
- ambient temperature sensor;
- 12 temperature sensors for the single unit;
- 5 auxiliary analogue inputs;
- measurement of the voltage of a row;
- calculation of the resistance of the individual cells;
- calculation of the residual discharge time;
- calculation of the energy supplied by the battery (Ah);
- automatic storage of the trends of the monitored data;
- calculation of the internal temperature of the individual cells;
- calculation of the charge state of the individual cells;
- storage of the alarm history (that is alarm log);
- storage of the discharge events;
- scanning of 10 single blocks per second;
- voltage measurements with a resolution of 0.001 [V] and self-calibration;
- electric current measurements with a resolution of 0.001 [A] and self-calibration;
- temperature measurements with a resolution of +/- 1 DEG C, and self-calibration;
- hardware and software (not dedicated that is commonly available on the market);
- protocols for external access RS-232 and RS-485 (not dedicated that is commonly available on the market);
- arrangement for remote access by means of a modem with Audio Dialer.

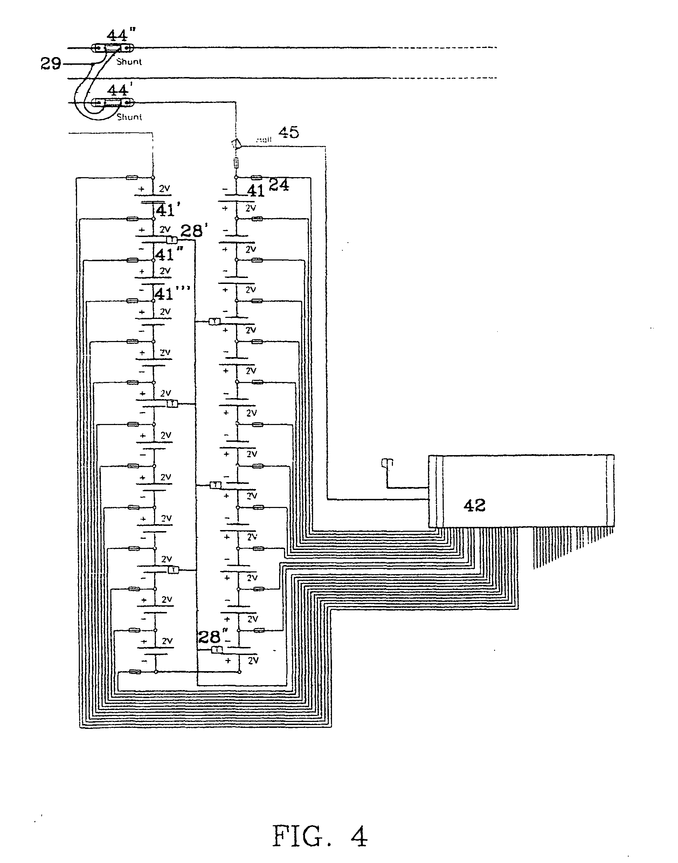

In Fig. 4 there is shown, in principle, an electric circuit arrangement of a row composed of 24 elements, and of the monitoring and equalisation apparatus for the batteries. In a symmetric manner, the same monitoring apparatus may be used to control an additional row, of 24 elements of 2 V each, that has not been included in the drawing, in order to simplify it. Temperature probes 28 are directly interfaced with the elements 41', 41", and said probes, besides indicating - to the monitoring and equalisation apparatus 42 - the instant value of the temperature on the battery elements, are also used locally by the regulators 27 and 34, respectively located at the aerogenerator and the photovoltaic generator. Moreover, there is provided a pair of shunts 44' and 44", for the additional row of 24 elements that is not included in the figure, and said shunts 44', 44"are connected in series in order to measure the sum of the electric currents in the batteries. Therefore, also this measurement is used locally by the regulators 27 and 34, which are located respectively at the aerogenerator and at the photovoltaic generator.

The detection of the discharge current of the batteries is performed by a Hall sensor 45, which sends the signal corresponding to a particular load (apparatus), to the monitoring and equalisation apparatus 42.. Therefore, the parameters and the physical values that are sent to the input of the monitoring system, are the following:
- the ambient temperature detected by the probe 46;
- the voltage of a row, and the resistance of the cells;
- the residual discharge time;
- the energy (Ah) that is drawn form the batteries;
- the cell internal temperature; moreover, the historic information (that is the log) related to the acquired alarm signals and to the batteries' discharges are also memorised.

### Description of the tests

As mentioned above, the system performs the following tests and functions:
- automatic test;
- battery discharge test;
- response test;
- balancing of the charge of the single units (equalisation).

### Automatic test (or variable voltage test)

Each time the voltage automatic scanning is enabled, the system measures the analogue values on each channel every time that the scanning of the battery elements is switched.

The scanning frequency is predefined at a value comprised between 'a channel per second' and about '10 channels per second'. Each measured voltage value is compared with the alarm value (low and high) and each alarm situation is recorded in the computer alarm file. Moreover, the alarm contacts (relay alarm) are controlled, and a message appears on the liquid crystal display of the instrument.

### Battery discharge test

The battery discharge test is automatically activated when the presence of a battery discharge current is detected, or in case of absence of voltage supply to the control device - for example an AutoCap. The system performs the scanning of the battery voltages at the maximum possible frequency (about 10 channels per second). This scanning frequency of the discharge is automatically set and is independent from the value set for the scanning frequency in the automatic test.

At the end of the discharge, the scanning frequency returns to the value that is set by the user.

A further function of the discharge test is the activation of the measurement of the discharge time. This function allows the system to compare the battery discharge rate (speed) with the programmed response curve and to communicate to the user an estimate of the remaining time during which the battery can still support the load. This residual time is given with an accuracy of one minute.

Should the load on the battery change, the count of the remaining time would be updated in such a way as to take account of this change.

The data related to a discharge event are written on a disk. These files contain very useful information, like the voltages of the single units, the battery discharge current, and the residual amount of Ah (ampere-hours); all data are accompanied by the hour and date at which they have been detected or calculated.

### Response test

The voltage measurements are generally a good indication of the 'health status' of a battery, but in some cases they could be misleading. The batteries may have a good working range voltage even if their conditions are critical. For this reason, the system uses the response test. This test provides for the application of a voltage to each single block, and for the measurement of the electric current amount this single block can absorb. This value gives an indication of the electrochemical status of the single block and of the quality of the connections.

Electric current absorption from batteries that are in poor efficiency conditions, is different from absorption of batteries that are in a good state, and it depends from the reasons why the battery is no more good. The system measures the electric current absorbed by each single block, and since a change of the conditions of a battery implies a change in the absorbed current, the response value of the test will differ in each individual case. The system generates an alarm for significantly different responses. In this case it is advisable to proceed to a more accurate analysis of the conditions of this cell or of the single block where the alarm signal was generated. Since batteries differ from each other under different aspects, the system must be started with a new battery or with a battery that has been tested recently. Then, it is possible to utilise as reference data the data obtained from a battery that is in a good state.

The system allows to obtain a plotting of the response trend.

This graph is a comparison between the response value of each channel with respect to a normal pre-set value. The response deviation (or shift) is defined as the difference between the most recent response value, and the value of response trend. The trend alarm is activated when this deviation is above the pre-set value.

The response test is automatically disabled in the 24 hours following the initial installation, after a discharge event, or in case cell balancing is being performed. This allows the battery to maintain itself or to reach an equilibrium, and moreover it avoids acquisition of incorrect data.

The response tests are performed automatically at the expiration of the predefined intervals, during the installation phase.

### Single-block charge balancing

After each scanning of the voltages of the single-blocks of a battery's row, the average with respect to the row is calculated. The system charges a single-block at a time, and then returns to the first single-block of the row, and forces a charging current only into those single-blocks whose measured voltage value is less than the row average by a value exceeding a predetermined percentage deviation (1%). Since the battery charger that is connected to the battery's terminals maintains a constant voltage throughout the battery, each voltage increase in a single-block implies a voltage decrease on a different single-block. This voltage decrease must necessarily occur in a single-block having a voltage greater than the average of the battery. Hence, by increasing the voltage in a not sufficiently charged single-block, the voltage in a single-block that is charged too much will be lowered, and consequently the voltages of different single blocks of the battery tend to balance each other, eventually reaching an intermediate value that corresponds to the average. This balancing process or equalisation may require some days, depending on the battery size, and on the initial "unbalance degree".

From a detailed study of the major products (aerogenerators) of the same size (15 kW), and of the optimum machine -known under the name Jacobs-, the machine of the present invention has the principal feature of being suited for each kind of wind, and of not requiring a device for the interruption of its operation (unlimited cut-out), moreover, it is constructed with materials (e.g. stainless steel, polymers, etc.) that insure a perfect duration (life) also in presence of saline atmosphere.

Typically, the location of installation may not be sufficiently vast to receive a separate tower with its aerogenerator; thus, also in order to avoid an interference with the radio waves transmitted by the radio base station, it is preferred to mount the generator on the same trestle that is used for the transmission, and to introduce inside this trestle - after an appropriate adaptation-, a steel-made independent post, by widening the foundation as specified above.

Moreover, the panels of the three photovoltaic generators are conveniently and advantageously mounted above the SRB (radio base station), normally in a shelter, using a supporting structure made of metallic section bars.

## Claims

1. A radio base station for mobile cellular telephony comprising:
- a radio transceiver system;
- plants for generating electric energy from solar energy and wind energy;
- a battery set comprising a plurality of cells that co-operates with said plants for storing the generated electric energy and feeding said radio transceiver system;
- a monitoring device for monitoring said battery set and preventing malfunctions adapted to actively interact in a selective way with each cell of the battery set so as to maintain the charge in each cell within a preset deviation from a predetermined average voltage.

2. A radio base station for mobile cellular telephony according to claim 1, wherein the monitoring device comprises a current source which is adapted to be connected to each cell of the battery set for individually charging the cells having a voltage below the predetermined average voltage by at least the preset deviation.

3. A radio base station for mobile cellular telephony according to claim 1 or 2, wherein the monitoring device is adapted to measure the voltage of each cell of the battery set for determining and updating the average voltage of the cells.

4. A radio base station for mobile cellular telephony according to claim 3, wherein the monitoring device is adapted to apply an overvoltage to each cell of the battery set that has a voltage below the updated average voltage by at least the preset deviation, until all cell voltages fall within the preset deviation from the updated predetermined average voltage.

5. A radio base station for mobile cellular telephony according to any of claims 1 to 4, wherein the monitoring device comprises a battery charger which is connected to terminals of the battery set for maintaining a constant voltage throughout the battery set.

6. A radio base station for mobile cellular telephony according to any of claims 1 to 5, wherein the monitoring device is adapted to actively interact in a selective way with each cell of the battery set for the evaluation of the electrochemical condition of each cell.

7. A radio base station for mobile cellular telephony according to any of claims 1 to 6, wherein the monitoring device is adapted to actively interact in a selective way with each cell of the battery set for the evaluation of the thermal state of each cell.

8. A radio base station for mobile cellular telephony according to any of claims 1 to 7, wherein the monitoring device is adapted to actively interact in a selective way with each cell of the battery set for the evaluation of the charge state of each cell.

9. A, radio base station for mobile cellular telephony according to any of claims 1 to 8, wherein the monitoring device is adapted to individually check a health state of the cells of the battery set by charging each cell and by monitoring the charging time as a function of the voltage applied to the cell.

10. A radio base station for mobile cellular telephony according to any of claims 1 to 9, further comprising a single supporting structure adapted to support both the radio transceiver system and the plant for generating electric energy from wind energy.

11. A radio base station for mobile cellular telephony according to claim 10, wherein the single supporting structure comprises
- a support (2) for supporting the radio transceiver system, the support (2) having a basement, and
- a tower for supporting the plant for generating electric energy from wind energy within the support (2),
wherein the tower shares the basement with the support (2) and the basement is structured in such a way as to support both the support (2) and the tower.

12. A radio base station for cellular mobile telephony according to claim 11, wherein the single supporting structure further comprises a plurality of retaining and connection structures (5', 5", 5"') interposed between the support (2) and the tower for connecting the support (2) and the tower to one other.

13. A radio base station for cellular mobile telephony according to claim 10, wherein the single supporting structure comprises a support (2) for supporting the radio transceiver system, the plant for generating electric energy from wind energy is mounted on the support (2) and said support (2) is structured in such a way as to support also the plant for generating electric energy from wind energy.

14. A radio base station for mobile cellular telephony according to any of claims 11 to 13, wherein the support (2) for supporting the radio transceiver system is a trestle.

15. A radio base station for mobile cellular telephony according to claim 10, wherein the single supporting structure comprises a tower for supporting the plant for generating electric energy from wind energy, the radio transceiver system is mounted on the tower and said tower is structured in such a way as to support also the radio transceiver system.
